(19) Europäisches Patentamt / European Patent Office / Office européen des brevets

(11) **EP 3 535 215 B1**

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(21) Anmeldenummer: **16797482.3**

(22) Anmeldetag: **07.11.2016**

(51) Int Cl.:
*C01B 33/02* (2006.01)     *B02C 17/00* (2006.01)
*B22F 9/00* (2006.01)     *C09C 1/28* (2006.01)
*H01M 4/134* (2010.01)     *H01M 4/38* (2006.01)
*H01M 4/58* (2010.01)

(86) Internationale Anmeldenummer:
**PCT/EP2016/076853**

(87) Internationale Veröffentlichungsnummer:
**WO 2018/082794 (11.05.2018 Gazette 2018/19)**

(54) **VERFAHREN ZUM MAHLEN VON SILIZIUM ENTHALTENDEN FESTSTOFFEN**

METHOD FOR GRINDING SILICON-CONTAINING SOLIDS

PROCÉDÉ POUR BROYER DES MATIÈRES SOLIDES CONTENANT DU SILICIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.09.2019 Patentblatt 2019/37**

(73) Patentinhaber: **Wacker Chemie AG**
**81737 München (DE)**

(72) Erfinder:
• **HANELT, Eckhard**
**82269 Geltendorf (DE)**

• **FRICKE, Michael**
**84489 Burghausen (DE)**

(74) Vertreter: **Ege, Markus et al**
**Wacker Chemie AG**
**Hanns-Seidel-Platz 4**
**81737 München (DE)**

(56) Entgegenhaltungen:
**EP-A2- 1 102 340     JP-A- 2011 065 796**
**JP-A- 2013 206 535**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft Verfahren zum Mahlen von Silizium enthaltenden Feststoffen.

In vielen Anwendungen besteht Bedarf an Silizium-Partikeln mit Partikeldurchmessern im Mikrometerbereich, wie beispielsweise beim Einsatz von Silizium-Partikeln als Aktivmaterial in negativen Elektroden von Lithium-Ionenbatterien. Ein Weg zur Herstellung solcher Partikel führt über die Zerkleinerung größerer Silizium-Partikel, beispielsweise durch Mahlen. Zur Herstellung von Siliziumpulver mit durchschnittlichen Partikelgrößen von beispielsweise 0,02 bis 10 $\mu$m kommen häufig Nassmahlverfahren zum Einsatz, wie aus der EP3027690 bekannt. In Nassmahlverfahren wird das Mahlgut in einer Mahlflüssigkeit suspendiert. Mahlflüssigkeiten, wie Alkohole, können mit den Siliziumoberflächen unter Freisetzung von Wasserstoff reagieren. Nach der Nassmahlung ist zur Herstellung trockener Pulver eine Trocknung und damit ein zusätzlicher Verfahrensschritt erforderlich. Nachteiligerweise kann es beim Trocknen der Mahlsuspensionen zum Agglomerieren von Silizium-Partikeln kommen. Anschließendes Deagglomerieren macht nochmals einen weiteren Verfahrensschritt erforderlich, insbesondere im Falle des Einsatzes der Silizium-Partikel in Elektrodentinten für Lithiumionen-Batterien, bei dem auf homogene und enge Partikelgrößenverteilungen Wert gelegt wird.

Die EP1102340 beschreibt das Mahlen von Silizium-Partikeln in einer Walzenschüsselmühle bei einem niedrigen Sauerstoffpartialdruck von 10 Pa bis 20000 Pa mit dem Ziel, Siliziumpartikel mit möglichst dünner Oxidschicht an der Oberfläche zu erhalten. Der Partialdruck von Sauerstoff in Luft unter Normalbedingungen liegt im Bereich von 21230 Pascal oder 0,212 bar.

Bei der Herstellung und Handhabung von trockenen Pulvern aus kleinteiligen Silizium-Partikeln stellen Staubexplosionen eine große Gefahrenquelle dar. Denn Silizium-Partikel werden an ihrer Oberfläche durch Sauerstoff, beispielsweise Luft, oder durch sonstige reaktive Gase in einer exothermen Reaktion rasch oxidiert, was bei kleinteiligen Silizium-Partikeln leicht in einer Staubexplosion münden kann. Im Zuge des Mahlprozesses werden Silizium-Partikel immer kleiner und die spezifische Oberfläche der Partikel wird dabei immer größer, so dass der Raum für eine Oxidation an der Oberfläche der Silizium-Partikel zunimmt und die Gefahr für Staubexplosionen steigt. Dies gilt umso mehr, wenn die Partikel höheren Temperaturen oder höheren Drücken ausgesetzt sind.

Dementsprechend werden in EP1102340 für das Mahlen von Silizium niedrige Sauerstoffpartialdrücke empfohlen. Des Weiteren impliziert EP1102340 milde Mahlbedingungen, wie Raumtemperatur und Umgebungsdruck.

Die US2008/0054106 empfiehlt, das Mahlen von Silizium mit Stickstoff als Mahlgas durchzuführen. US2008/0054106 betont, dass das Mahlgas trocken sein muss und mit Silizium nicht reaktiv sein darf. Hierbei legt US2008/0054106 größten Wert darauf, dass beispielsweise Sauerstoff, Wasser, Wasserstoff, Kohlenmonoxid oder Kohlendioxid vom Mahlgas ausgeschlossen werden. Die US2008/0054106 impliziert als Mahltemperatur Raumtemperatur. Die EP1754539 stellt Silizium-Partikel mit mittleren Durchmessern von 50 bis 1000 $\mu$m mittels Mahlen her. Für Lithium-Ionen-batterien werden aber Silizium-Partikel mit mittleren Partikelgrößen von im Allgemeinen kleiner als 10 $\mu$m benötigt. Die Mahlung der EP1754539 erfolgt in einer Wirbelschicht-Strahlmühle, wobei als Mahlgasstrom Stickstoff, Argon oder unter anderem gereinigte Luft Einsatz finden können. Der Sauerstoffpartialdruck der gereinigten Luft ist nicht erwähnt. JP2013206535 offenbart das Mahlen von Silicium unter Atmosphärendruck unter Einsatz von Luft und Stickstoff bei einer Temperatur zwischen -80 und 30°C.

Eine weitere Herausforderung stellt die Verarbeitung der gemahlenen Silizium-Partikel in Anodentinten zur Herstellung von Anodenbeschichtungen für Lithiumionen-Batterien dar. In Anodentinten sind die einzelnen Bestandteile des Anodenmaterials in einem Lösungsmittel dispergiert. Im industriellen Maßstab wird als Lösungsmittel aus ökonomischen und ökologischen Gründen Wasser favorisiert. Die Oberfläche von Silizium ist jedoch gegenüber Wasser sehr reaktiv und wird bei Wasserkontakt oxidiert unter Bildung von Siliziumoxiden und Wasserstoff. Die Wasserstofffreisetzung führt in der Verarbeitung der Anodentinten zu erheblichen Schwierigkeiten. Beispielsweise können solche Tinten auf Grund eingeschlossener Gasblasen inhomogene Elektrodenbeschichtungen ergeben. Zudem macht die Wasserstoffbildung aufwändige sicherheitstechnische Schutzmaßnahmen erforderlich. Eine unerwünschte Oxidation von Silizium führt letztlich auch zur Verringerung des Anteils an elementarem Silizium in der Anode, was die Kapazität der Lithiumionen-Batterie reduziert. Eine weitere Zielstellung besteht somit darin, die Silizium-Partikel im Zuge des Mahlens auch so zu passivieren, dass deren Stabilität in wässrigen Anodentinten gesteigert wird.

Die Aufgabe für die vorliegende Erfindung bestand nun darin, Verfahren zum Mahlen von Silizium enthaltenden Feststoffen bereitzustellen, mit denen die vorgenannten Nachteile möglichst vermieden werden können und auch Silizium-Partikel mit kleinen durchschnittlichen Partikelgrößen zugänglich werden. Insbesondere sollten Staubexplosionen während des Mahlens von Silizium unterbunden werden. Nach Möglichkeit sollte auch die Stabilität der Silizium-Partikel in wässrigen Anodentinten für Lithiumionen-Batterien verbessert werden.

Überraschenderweise wurde diese Aufgabe gelöst durch Mahlen von Silizium enthaltenden Feststoffen, die Phasen von elementarem Silizium enthalten, in einer Strahlmühle unter Einsatz eines oder mehrerer Gase (Mahlgas), die reaktives Gas mit einem Partialdruck von ≥ 0,3 bar enthalten, wobei reaktive Gase ausgewählt werden aus der Gruppe umfassend Sauerstoff, Ozon, anorganische Peroxide, Kohlenstoffmonoxid, Kohlenstoffdioxid, Ammoniak, Stickoxide, Cyanwasserstoff, Schwefelwasserstoff, Schwefeldioxid und flüchtige organische Verbindungen enthaltend 1 bis 4 Kohlenstoffatome, wie beispielsweise organische Peroxide, Epoxide, Alkene, Alkine, Alkohole, Ether, Aldehyde, Ketone, Carbonsäuren, Ester, Amine, Amide, Nitrile, Alkylhalogenide oder aliphatische Kohlenwasserstoffe, wobei das reaktive Gas eine Temperatur von ≥ 50°C hat. Das Mahlen von anorganischen Feststoffen an Luft, auch bei erhöhten Temperaturen oder Drücken, ist beispielsweise aus der WO2007/131502 bekannt. Als Mahlgut wird in der WO2007/131502 jedoch nur amorphes $SiO_2$, angeführt, wie Kieselsäure, Kieselgel oder Silicate, aber kein Silizium genannt.

Ein besonderer Aspekt beim Mahlen von Silizium enthaltenden Feststoffen ist, dass ständig neue, aktive Siliziumoberflächen mit offenen chemischen Bindungen entstehen, die hochreaktiv sind gegenüber reaktiven Gasen. Solche Reaktionen sind exotherm und können einen explosiblen Verlauf nehmen. Deswegen wurde bisher beim Mahlen von Silizium enthaltenden Feststoffen darauf geachtet, dass reaktive Gase, wie Sauerstoff, Kohlenmonoxid oder Kohlendioxid, ganz ausgeschlossen sind oder höchstens in geringem Umfang beim Mahlen zugegen sind, oder dass das Mahlen unter milden Bedingungen erfolgte, wie beispielsweise in EP1754539 oder EP3027690 beschrieben. Vor diesem Hintergrund war zu befürchten, dass das erfindungsgemäße Mahlen der Silizium enthaltenden Feststoffe einen so heftigen Verlauf nimmt, dass eine Staubexplosion auftritt oder das Silizium mit reaktiven Gasen in einem solchen Umfang abreagieren, dass sich die so erhaltenen Silizium-Partikel nicht mehr für entsprechende Anwendungen, wie Lithiumionen-Batterien, eignen. Überraschenderweise treten diese Probleme beim erfindungsgemäßen Verfahren nicht oder zumindest nicht in hinderlicher Weise auf.

Zur Beschichtung von Silizium finden vielfach CVD-Verfahren (chemical vapor deposition; chemische Gasphasenabscheidung) Einsatz, wie beispielsweise in der WO2014/081817. Auch die EP0538611 beschreibt das Beschichten von Siliziumwafern mit Siliziumcarbid nach einem CVD-Verfahren unter Einsatz von Ethylen. Hierzu werden allgemein Silizium-Partikel eingesetzt, die keine aktiven Metalloberflächen enthalten. Zur Anbindung von organischen Molekülen an Siliziumpartikel empfiehlt die WO00/33976, die Silizium-Partikel zunächst zu halogenieren und anschließend mit einem Nukleophil umzusetzen. Vorteilhafterweise können die Oberflächen der Silizium-Partikel erfindungsgemäß schon während des Mahlvorgangs mittels der reaktiven Gase beschichtet werden.

Gegenstand der Erfindung sind Verfahren zur Herstellung von Silizium-Partikeln durch Mahlen von Silizium enthaltenden Feststoffen unter Einsatz eines oder mehrerer Gase (Mahlgas), die reaktives Gas mit einem Partialdruck von ≥ 0,3 bar enthalten, wobei reaktive Gase ausgewählt werden aus der Gruppe umfassend Sauerstoff, Ozon, anorganische Peroxide, Kohlenstoffmonoxid, Kohlenstoffdioxid, Ammoniak, Stickoxide, Cyanwasserstoff, Schwefelwasserstoff, Schwefeldioxid und flüchtige organische Verbindungen.

Im Folgenden werden die im erfindungsgemäßen Verfahren eingesetzten Silizium enthaltenden Feststoffe auch abgekürzt als Edukt-Si bezeichnet. Die erfindungsgemäß hergestellten Silizium-Partikel werden abgekürzt auch als Produkt-Si-Partikel bezeichnet.

Das Mahlgas enthält das reaktive Gas mit einem Partialdruck von vorzugsweise 0,3 bis 200 bar, mehr bevorzugt 0,4 bis 100 bar, besonders bevorzugt 0,4 bis 20 bar, noch mehr bevorzugt 0,5 bis 10 bar und am meisten bevorzugt 0,6 bis 4 bar.

Das reaktive Gas weist eine Temperatur auf von ≥ 50°C, besonders bevorzugt 80 bis 800°C, noch mehr bevorzugt 100 bis 600°C und am meisten bevorzugt 150 bis 400°C.

Das Mahlgas hat einen Druck von vorzugsweise 1 bis 200 bar, besonders bevorzugt von 1,1 bis 40 bar, noch mehr bevorzugt 1,5 bis 20 bar und am meisten bevorzugt 2 bis 10 bar. Vorteilhafterweise ist es in bevorzugten Ausführungsformen des erfindungsgemäßen Verfahrens auch möglich, den Druck und/oder die Temperatur durch Komprimieren des reaktiven Gases mit nur einer Verdichterstufe einzustellen und das so komprimierte reaktive Gas ohne Kühlung im erfindungsgemäßen Verfahren einzusetzen. Dies führt zu einer höheren Verfahrenseffizienz im Vergleich zu beispielsweise herkömmlichen Strahlmühlenverfahren, in denen üblicherweise zwei Verdichterstufen und zudem eine Kühlung des Mahlgases erforderlich sind.

Das Mahlgas enthält zu vorzugsweise 1 bis 100 Vol.%, besonders bevorzugt 5 bis 80 Vol.% und noch mehr bevorzugt 10 bis 50 Vol.% reaktive Gase. Das Mahlgas enthält Stickstoff, Edelgase oder sonstige Inertgase zu vorzugsweise ≤ 99 Vol.%, besonders bevorzugt 20 bis 95 Vol.% und am meisten bevorzugt 50 bis 90 Vol.%. Wasser, insbesondere in Form von Wasserdampf, ist im Mahlgas zu vorzugsweise ≤ 10 Vol.%, besonders bevorzugt ≤ 5 Vol.% und am meisten bevorzugt ≤ 1 Vol.% enthalten. Sonstige Verunreinigungen oder sonstige gasförmige Komponenten sind im Mahlgas zu vorzugsweise ≤ 10 Vol.%, besonders bevorzugt ≤ 5 Vol.% und am meisten bevorzugt ≤ 1 Vol.% enthalten. Die Angaben in Vol.% beziehen sich jeweils auf das Gesamtvolumen des Mahlgases. Die vorgenannten Komponenten wie auch die Angaben in Vol.% für unterschiedliche Komponenten sind jeweils sowohl unabhängig voneinander als auch in Kombination offenbart.

Am meisten bevorzugt enthält ein Sauerstoff enthaltendes Mahlgas als reaktives Gas Luft, insbesondere Umgebungsluft, beispielsweise bei einem Druck von ≥ 1,5 bar. Umgebungsluft wird vorzugsweise ungereinigt eingesetzt. Nichtsdestotrotz kann die eingesetzte Umgebungsluft aber beispielsweise von Partikeln befreit sein, beispielsweise mittels einer Partikelfilterung.

Die reaktiven Gase werden ausgewählt aus der Gruppe umfassend Sauerstoff, Ozon, anorganische Peroxide, Kohlenstoffmonoxid, Kohlenstoffdioxid, Ammoniak, Stickoxide, Cyanwasserstoff, Schwefelwasserstoff, Schwefeldioxid und flüchtige organische Verbindungen.

Die reaktiven Gase haben bei einem Druck von 1 bar einen Siedepunkt von vorzugsweise ≤ 300°C, besonders bevorzugt ≤ 200°C und ganz besonders bevorzugt ≤ 100°C. Verbindungen mit solchen Siedepunkten werden auch als flüchtige Verbindungen bezeichnet. Ein anorganisches Peroxid ist beispielsweise Wasserstoffperoxid. Beispiele für Stickoxide sind Distickstoffmonoxid, Stickstoffmonoxid, Stickstoffdioxid und Distickstofftetroxid.

Die flüchtigen organischen Verbindungen enthalten 1 bis 4 Kohlenstoffatome. Die flüchtigen organischen Verbindungen können verzweigt oder unverzweigt, linear oder zyklisch oder substituiert oder unsubstituiert sein.

Bei den flüchtigen organischen Verbindungen kann es sich beispielsweise um organische Peroxide, Epoxide, Alkene, Alkine, Alkohole, Ether, Aldehyde, Ketone, Carbonsäuren, Ester, Amine, Amide, Nitrile, Alkylhalogenide oder aliphatische Kohlenwasserstoffe handeln.

Ein Beispiel für organische Peroxide ist t-Butylhydroperoxid. Beispiele für Epoxide sind Ethylenoxid und Propylenoxid. Beispiele für Alkene sind Ethen, Propen, Buten und Butadien. Beispiele für Alkine sind Ethin, Propin und Butin. Beispiele für Alkohole sind Methanol, Ethanol, Propanol, iso-Propanol, Butanol und Ethylenglykol. Beispiele für Ether sind Diethylether, Dimethoxyethan, Tetrahydrofuran und Dioxan. Beispiele für Aldehyde sind Formaldehyd, Acetaldehyd, Propanal, Butanal und Glyoxal. Beispiele für Ketone sind Aceton und Ethylmethylketon. Beispiele für Carbonsäuren sind Methansäure, Ethansäure, Propansäure, Butansäure, Acrylsäure, Crotonsäure, Acetylendicarbonsäure, Milchsäure und Maleinsäure. Beispiele für Ester sind Ameisensäuremethylester, Ameisensäurethylester, Essigsäuremethylester, Essigsäureethylester. Beispiele für Amine sind Methylamin, Ethylamin, Propylamin, Dimethylamin, Diethylamin, Trimethylamin, Pyrrol, Pyrazol, Pyrrolidin, Morpholin und Pyrimidin. Beispiele für Amide sind Formamid, Dimethylformamid und Acetamid. Beispiele für Nitrile sind Acetonitril, Propionitril, Butyronitril und Acrylnitril. Beispiele für Alkylhalogenide sind Methylchlorid, Ethylchlorid, Propylchlorid, Brommethan, Bromethan, Brompropan, Iodmethan, Iodethan, Iodpropan, Dichlormethan, Dibrommethan, Diiodmethan, Chloroform, Bromoform, Iodoform und Tetrachlorkohlenstoff. Beispiele für aliphatische Kohlenwasserstoffe sind Methan, Ethan, Propan, Propylen, Butan, Buten und Isobutan.

Das am meisten bevorzugte reaktive Gas ist Sauerstoff, insbesondere als Bestandteil von Luft.

Das Mahlen wird durchgeführt in einer Strahlmühle.

Mühlen umfassen allgemein eine Mahlkammer mit einer oder mehreren Einlassöffnungen für das Mahlgas (Mahlgaseinlass), insbesondere in Form von Düsen, und gegebenenfalls eine oder mehrere weitere Vorrichtungen, wie ein oder mehrere Sichter.

Sichter können den Mühlen als separate Einheit nachgeschaltet sein. Bevorzugt sind Sichter in die Mühlen integriert, im Allgemeinen der Mahlkammer räumlich nachgelagert. Sichter sind zweckdienlich, um feine Partikel oder Partikel mit einer engen Partikelgrößenverteilung zu erhalten.

Bevorzugte Strahlmühlen sind Gegenstrahlmühlen oder Spiralstrahlmühlen. Besonders bevorzugt sind Dichtbettstrahlmühlen, Spiralstrahlmühlen und insbesondere Fließbettgegenstrahlmühlen.

Fließbettgegenstrahlmühlen enthalten, vorzugsweise im unteren Drittel der Mahlkammer, zwei oder mehr Einlässe für das Mahlgas, bevorzugt in Form von Düsen, welche sich bevorzugt in einer horizontalen Ebene befinden. Die Mahlstrahleinlässe sind besonders bevorzugt so am Umfang der vorzugsweise runden Mahlkammer angeordnet, dass sich die Mahlstrahlen alle an einem Punkt im Inneren der Mahlkammer treffen. Insbesondere bevorzugt sind die Mahlstrahleinlässe gleichmäßig über den Umfang der Mahlkammer verteilt. Im Falle von drei Mahlstrahleinlässen beträgt der Abstand vorzugsweise jeweils 120°.

Die Mühlen können in herkömmlicher Weise aus hierfür gängigen Materialien aufgebaut sein. Die Mühlen oder Teile der Mühlen, insbesondere der Mahlraum, sind vorzugsweise aus Silizium oder verschleißfester Keramik, wie Zirkonoxid, Siliziumnitrid oder Siliziumkarbid, hergestellt oder damit ausgekleidet. Solche Keramiken sind besonders verschleißfest. Diese Maßnahmen sind geeignet, um eine Kontamination des Mahlguts mit Fremdstoffen in Folge des Kontakts mit den Wänden der Mühle zu vermeiden oder zumindest zu reduzieren.

Die einzelnen Teile der Mühlen, die mit den reaktiven Gasen in Kontakt kommen, insbesondere der Mahlraum, werden vorzugsweise unter Bedingungen, wie Temperatur oder Druck, gehalten, unter denen ein Auskondensieren der reaktiven Gase zumindest weitestgehend, vorzugsweise vollständig unterbleibt.

Soweit nicht anders angegeben, kann das Mahlen auf an sich herkömmliche Weise durchgeführt werden. So können die Silizium enthaltenden Feststoffe wie üblich in die Mahlkammer der Mühle eingebracht werden. Das reaktive Gas wird der Mahlkammer im Allgemeinen durch ein oder mehrere Mahlgaseinlässe, bevorzugt in Form von Düsen, zugeführt. Im Mahlraum der Mühlen befinden sich generell reaktive Gase beziehungsweise Mahlgas.

Im Falle von Strahlmühlen wird das reaktive Gas der Mahlkammer im Allgemeinen durch Düsen zugeführt. In der Mahlkammer sind im Allgemeinen ein oder mehrere Mahlgasströme (Mahlstrahlen) vorhanden. In Strahlmühlen werden die zu mahlenden, Silizium enthaltenden Feststoffe im Allgemeinen in der Mahlkammer von Mahlstrahlen mitgerissen und üblicherweise auf hohe Geschwindigkeiten beschleunigt. Das Mahlen der Feststoffe erfolgt hierbei im Allgemeinen, indem unterschiedliche Feststoff-Partikel aufeinanderprallen, oder auch indem Feststoff-Partikel auf der Wand der Mahlkammer aufschlagen, und dabei zerkleinert werden.

Das erfindungsgemäße Verfahren ist im Allgemeinen ein Trockenmahlverfahren. Das Mahlen kann also in Abwesenheit von Lösungsmitteln, insbesondere in Abwesenheit von Flüssigkeiten durchgeführt werden. Das Mahlen erfolgt also im Allgemeinen nicht in Dispersion, was für Nassmahlverfahren von Silizium typisch ist.

Betriebsbedingungen oder Vorkehrungen zum Explosionsschutz kann der Fachmann der vorliegenden Offenbarung entnehmen. Etwaige weitere Maßnahmen sind dem Fachmann vertraut.

Die obigen Angaben oder Parameter betreffend die reaktiven Gase oder das Mahlgas beziehen sich vorzugsweise auf reaktive Gase oder Mahlgas, wie sie in die Mühle, insbesondere in die Mahlkammer der Mühle, eingebracht werden, oder wie sie in der Mahlkammer, insbesondere von Kugelmühlen oder Schlagmühlen, vorliegen. Vorzugsweise während des Durchströmens des Mahlgaseinlasses, insbesondere während des Durchströmens des Mahlgaseinlasses in Form von Düsen der Strahlmühlen, oder bei Eintritt in die Mahlkammer werden die vorgenannten Angaben von den reaktiven Gasen oder vom Mahlgas erfüllt. Die reaktiven Gase oder das Mahlgas können die erfindungsgemäßen Parameter oder Maßgaben während der gesamten Durchführung des Verfahrens erfüllen oder nur zeitweise. Beispielsweise können während des Anfahrens oder des Herunterfahrens der Mühle andere Bedingungen gewählt werden. Es ist auch möglich, dass während der Durchführung des Verfahrens zeitweise von den erfindungsgemäßen Parameter oder Maßgaben abgewichen wird. Vorzugsweise werden die erfindungsgemäßen Parameter oder Maßgaben aber eingehalten, während der wesentliche Teil oder der gesamte Teil der Edukt-Si-Partikel gemahlen wird.

Die Bestimmung der Partikelgrößenverteilung der erfindungsgemäß hergestellten Silizium-Partikel sowie der Silizium enthaltenden Feststoffe (Ausgangsmaterial) erfolgt erfindungsgemäß nach ISO 13320 mittels statischer Laserstreuung mit dem Messgerät Horiba LA 950. Die Proben werden nass in Isopropanol gemessen. Bei der Vorbereitung der Proben wird besondere Sorgfalt auf die Dispergierung der Partikel in der Messlösung aufgewendet, um statt Einzelpartikeln nicht die Größe von Agglomeraten zu messen. Dazu wurden stark verdünnte Suspensionen (0,2 bis 2 Gew.% Feststoffgehalt) der Silizium-Partikel in Isopropanol hergestellt, die vor der Messung 30 min mit Ultraschall behandelt wurden (beispielsweise in einem Hielscher Ultraschall-Laborgerät Modell UIS250v mit Sonotrode LS24d5, 120 W Leistung, 50% getaktet).

Die Partikelgrößenverteilungen werden durch die Werte $d_{10}$, $d_{50}$ oder $d_{90}$ charakterisiert, die für die 10%-, 50%- beziehungsweise 90%-Perzentilwerte der volumengewichteten Durchmessergrößenverteilungen der Partikel stehen.

Das Edukt-Si hat eine volumengewichtete Partikelgrößenverteilung mit einem $d_{90}$-Wert von vorzugsweise ≤ 10 mm, besonders bevorzugt $d_{90}$ ≤ 5 mm und ganz besonders bevorzugt $d_{90}$ ≤ 2 mm.

Der Median der volumengewichteten Durchmessergrößenverteilung $d_{50}$ der Produkt-Si-Partikel liegt im Bereich von vorzugsweise 0,3 μm bis 1 mm, besonders bevorzugt 0,5 μm bis 200 μm, noch mehr bevorzugt 1 μm bis 100 μm und am meisten bevorzugt 2 μm bis 50 μm.

Der $d_{10}$-Wert der Produkt-Si-Partikel liegt im Bereich von vorzugsweise 0,1 μm bis 200 μm, besonders bevorzugt 0,2 μm bis 50 μm und am meisten bevorzugt 0,4 μm bis 10 μm.

Der $d_{90}$-Wert der Produkt-Si-Partikel liegt im Bereich von vorzugsweise 1 μm bis 2 mm, besonders bevorzugt 2 μm bis 500 μm und am meisten bevorzugt 4 μm bis 100 μm.

Die relative Breite der volumengewichteten Größenverteilung $(d_{90} - d_{10}) / d_{50}$ der Produkt-Si-Partikel ist vorzugsweise ≤ 3 und besonders bevorzugt ≤ 2.

Die Produkt-Si-Partikel weisen Bruchflächen auf, die scharfkantig sein können. Sie sind typischerweise splitterförmig.

Eine Möglichkeit zur Charakterisierung der Partikelform ist die Sphärizität. Nach der Definition von Wadell ist die Sphärizität $\psi$ das Verhältnis aus der Oberfläche einer Kugel gleichen Volumens zur tatsächlichen Oberfläche eines Körpers. Im Falle einer Kugel hat $\psi$ den Wert 1. Nach dieser Definition haben die Produkt-Si-Partikel eine Sphärizität von vorzugsweise $0,3 < \psi < 0,9$ und besonders bevorzugt $0,5 < \psi < 0,9$.

Nach einer alternativen Definition ist die Sphärizität S das Verhältnis aus dem zu einem Kreis äquivalenten Durchmesser der Projektionsfläche A eines Partikels auf eine Ebene zum entsprechenden Durchmesser aus dem Umfang U dieser Projektion: $S = 2\sqrt{\pi A}/U$.

Im Falle eines idealen Kreises hat S den Wert 1. Für die Produkt-Si-Partikel liegt die Sphärizität S im Bereich von vorzugsweise 0,5 bis 0,9. Die Messung der Sphärizität S erfolgt durch grafische Auswertung von Aufnahmen einzelner Partikel mit einem optischen Mikroskop oder bei Partikeln < 10 μm mit einem Rasterelektronenmikroskop.

Die internationale Norm der "Federation Europeenne de la Manutention" gibt in der FEM 2.581 einen Überblick, unter welchen Gesichtspunkten ein Schüttgut zu betrachten ist. In der Norm FEM 2.582 werden die allgemeinen und spezifischen Schüttguteigenschaften hinsichtlich der Klassifizierung definiert. Kennwerte, die die Konsistenz und den Zustand des Gutes beschreiben, sind zum Beispiel Kornform und Korngrößenverteilung (FEM 2.581 / FEM 2.582: General characteristics of bulk products with regard to their classification and their symbolization). Nach DIN ISO 3435 können Schüttgüter in Abhängigkeit der Beschaffenheit der Kornkanten in 6 unterschiedliche Kornformen untergliedert werden:

I: scharfe Kanten mit ungefähr gleichen Ausmaßen in den drei Dimensionen (Beispiel: Würfel);

II: scharfe Kanten, deren eine deutlich länger ist als die anderen beiden (Beispiel: Prisma, Klinge);

III: scharfe Kanten, deren eine deutlich kleiner ist als die beiden anderen (Beispiel: Platte, Schuppen);

IV: runde Kanten mit ungefähr gleichen Ausmaßen in den drei Dimensionen (Beispiel: Kugel);

V: runde Kanten, in einer Richtung deutlich größer als in den anderen beiden (Beispiel: Zylinder, Stange);

VI: faserig, fadenförmig, lockenförmig, verschlungen.

Gemäß dieser Klassifizierung von Schüttgütern handelt es sich bei den Produkt-Si-Partikeln vorzugweise um Partikel der Kornformen I, II oder III.

Die folgenden Angaben zur stofflichen Zusammensetzung beziehen sich, soweit nichts anderes angegeben ist, sowohl auf die erfindungsgemäß hergestellten Produkt-Si-Partikel als auch auf das Edukt-Si.

Silizium im Sinne dieser Erfindung ist im Allgemeinen ein Feststoff, der Phasen von elementarem Silizium enthält.

Bevorzugt ist elementares Silizium. Denn elementares Silizium ist für Verfahren zur Herstellung von Silizium-Partikel enthaltenden Anodenmaterialien für Lithium-Ionen-Batterien besonders vorteilhaft. Solches Silizium besitzt die höchste Speicherkapazität für Lithiumionen.

Unter elementarem Silizium ist hochreines Polysilizium, mit geringem Anteil an Fremdatomen (wie beispielsweise B, P, As), gezielt dotiertes Silizium, aber auch metallurgisches Silizium, welches eine spezifizierte Menge elementarer Verunreinigung (wie beispielsweise Fe, Al, Ca) aufweisen kann, zu verstehen.

Das Silizium kann auch Siliziumoxid oder eine binäre, ternäre oder multinäre Silizium/Metall-Legierung (mit beispielsweise Sn, Ca, Co, Ni, Cu, Cr, Ti, Al, Fe) enthalten.

Die metallischen beziehungsweise die elementaren Verunreinigungen des Siliziums betragen vorzugsweise $\leq$ 5 Gew.%, besonders bevorzugt $\leq$ 2 Gew.% und ganz besonders bevorzugt $\leq$ 1 Gew.%.

Die Oberfläche der Produkt-Si-Partikel kann gegebenenfalls durch eine Oxidschicht oder durch andere anorganische oder durch organische Gruppen abgedeckt sein, beispielsweise Si-OH- oder Si-H-Gruppen oder über Si-C-, Si-O-, Si-N- oder Si-S-Bindungen kovalent angebundene Gruppen. Insbesondere können an die Oberfläche der Produkt-Si-Partikel reaktive Gase über Si-C-, Si-O-, Si-N- oder Si-S-Bindungen angebunden sein. Die flüchtigen organischen Verbindungen können während des Mahlens auch carbonisiert werden. Erfindungsgemäß sind also auch Kohlenstoff-beschichtete Produkt-Si-Partikel erhältlich.

Nach dem erfindungsgemäßen Verfahren sind Produkt-Si-Partikel erhältlich, die an der Oberfläche eine Beschichtung basierend auf einem oder mehreren reaktiven Gasen mit einer Schichtdicke von bevorzugt $\geq$ 3 nm, mehr bevorzugt 3 bis 100 nm, besonders bevorzugt 4 bis 40 nm und am meisten bevorzugt 5 bis 20 nm tragen (Bestimmungsmethode: siehe Beschreibung der Beispiele).

Die Produkt-Si-Partikel enthalten vorzugsweise $\geq$ 0,001 Gew.%, besonders bevorzugt 0,01 bis 20 Gew.%, noch mehr bevorzugt 0,1 bis 10 Gew.% und am meisten bevorzugt 0,1 bis 5 Gew.% Kohlenstoff, Stickstoff, Schwefel oder insbesondere Sauerstoff, bezogen auf das Gesamtgewicht der Produkt-Si-Partikel.

Falls die Produkt-Si-Partikel Siliziumoxid enthalten, dann liegt die Stöchiometrie des Oxids $SiO_x$ bevorzugt im Bereich $0 < x < 1{,}3$.

Falls das reaktive Gas Sauerstoff enthält, haben die Produkt-Si-Partikel, bezogen auf 1 $m^2$ Partikeloberfläche, einen Sauerstoffgehalt von vorzugsweise 5 bis 50 mg, besonders bevorzugt 6 bis 40 mg und am meisten bevorzugt 8 bis 30 mg (Bestimmungsmethode: Der Sauerstoffgehalt pro Partikeloberfläche in $mg/m^2$ ist der Quotient aus dem spezifischen Sauerstoffgehalt pro Masse Silizium, die mit einem Sauerstoffanalysator Leco TCH 600 gemessen wird, und dem aus der gemessenen Partikelgrößenverteilung unter der Annahme kugelförmiger Partikel berechneten Partikeloberfläche in $m^2/g$. Diese Partikeloberfläche wird bei der Messung mit einem Horiba LA950 direkt erhalten).

Ein weiterer Gegenstand der Erfindung sind Verfahren zur Herstellung von wässrigen Tintenformulierungen, dadurch gekennzeichnet, dass Produkt-Si-Partikel und ein oder mehrere Bindemittel mit Wasser gemischt werden.

Die erfindungsgemäß hergestellten Produkt-Si-Partikel können direkt in Anodentinten zur Herstellung von Anodenbeschichtungen für Lithiumionen-Batterien eingesetzt werden. Die Herstellung der Anodentinten und deren Weiterverarbeitung zu Anodenbeschichtungen und schließlich zu Lithiumionen-Batterien kann in an sich herkömmlicher Weise erfolgen, wie beispielsweise in der DE-A 102015215415.7 beschrieben.

Ein weiterer Gegenstand der Erfindung ist die Verwendung der erfindungsgemäß hergestellten Produkt-Si-Partikel zur Herstellung von Anoden für Lithiumionen-Batterien.

Überraschenderweise trat unter den erfindungsgemäßen Mahlbedingungen keine Staubexplosion auf. Durch Mahlen von Silizium unter erfindungsgemäßem Einsatz der reaktiven Gase erfolgt zwar an der Oberfläche der Silizium-Partikel eine Umsetzung von Silizium. Überraschenderweise erfolgt diese Umsetzung aber nur in begrenztem Umfang, so dass sich nur auf der Oberfläche der Partikel eine dünne Schicht bildet, die das Silizium vorteilhafterweise vor einer weiteren Umsetzung passiviert und auf diese Weise letztlich vor einer Staubexplosion bewahrt.

Infolge der Passivierung sind die erfindungsgemäß hergestellten Silizium-Partikel beim Lagern unter Normalbedingungen sowie in wässrigen Anodentintenformulierungen stabiler als herkömmlich hergestellte Silizium-Partikel.

Durch das erfindungsgemäße Mahlen unter Einsatz von reaktiven Gasen können die Nachteile von Nassmahlverfahren überwunden werden. So können die Silizium-Partikel erfindungsgemäß direkt in Form von Pulvern erhalten werden, ohne dass zusätzliche Verfahrensschritte für die Trocknung oder Deagglomeration der Silizium-Partikel notwendig werden. Zudem können Silizium-Partikel mit sehr kleinen mittleren Partikeldurchmessern erhalten werden.

Die erfindungsgemäß hergestellten Silizium-Partikel können vorteilhafterweise direkt als Ausgangsstoff für ein Anodenaktivmaterial von Lithium-Ionenbatterien eingesetzt werden, ohne dass ein weiterer Verfahrensschritt zur Bearbeitung der Silizium-Mahlprodukte erforderlich ist.

Die Erfindung wird anhand von den folgenden Beispielen erläutert:

Ermittlung der mittleren Dicke $d_{SiO2}$ der Oxidschicht:

Die Dicke der Oxidschicht auf der Oberfläche der gemahlenen Siliziumpartikel wird mittels folgender Gleichung ermittelt:

$$d_{SiO2} = 0,3 \cdot \psi \cdot m_O \cdot d_{50}$$

($d_{50}$: Median der Partikelgrößenverteilung der Si-Partikel; $\psi$: Sphärizität der Si-Partikel; mo: Gewichtsanteil von Sauerstoff an den Si-Partikeln).

Im Fall des Vergleichsbeispiels 3 nach Mahlen in StickstoffAtmosphäre und anschließender Lagerung an Luft erhält man nach dieser Formel mit $d_{50}$= 4,8 μm, $m_O$ = 0,27% und $\psi$ = 0,5 eine mittlere Dicke der Oxidschicht von 2 nm. Das ist ein aus der Literatur bekannter Wert für die spontane Oxidation von Siliziumoberflächen bei Lagerung an Luft unter Normalbedingungen.

In den Beispielen 1a, 1b und 2 wurden nach der oben genannten Formel Oxidschichten mit 3 nm und 4 nm Schichtdicke erhalten, die eine deutlich bessere Passivierung als im Vergleichsbeispiel 3 ergeben.

**Vergleichbeispiel 1a**

5 kg polykristallines Reinstsiliziumpulver aus Solarsilizium (Wacker BGF (sg) Type PCL-NCS-F, $d_{10}$ = 100 μm, $d_{50}$ = 240 μm, $d_{90}$ = 440μm) wurden in das Vorlagegefäß einer Fließbettstrahlmühle CGS 16 (Hersteller Netzsch Trockenmahltechnik GmbH) eingefüllt. Die Mühle wurde mit 48 m³/h Luft bei 20°C und 7 bar Überdruck betrieben (Sauerstoffpartialdruck: 1,7 bar). Die Drehzahl des Sichterrads betrug 3000 U/min.

Nach 150 min wurde die Mühle angehalten und das Auffanggefäß am Partikelfilter geöffnet. Es enthielt 2,1 kg Siliziumpulver mit $d_{10}$ = 2,5 μm, $d_{50}$ = 4,5 μm und $d_{90}$ = 7,3 μm (Messung im Horiba LA950). Die aus der Partikelgrößenverteilung unter der Annahme kugelförmiger Partikel berechnete Oberfläche betrug 0,67 m²/g. Die Partikel wurden in Luft bei Raumtemperatur unter Umgebungsdruck gelagert. Der danach mit einem Sauerstoffanalysator Leco TCH 600 bestimmte Sauerstoffgehalt betrug 0,43 Gew.% bzw. 6,5 mg/m² bezogen auf die berechnete Partikeloberfläche.

**Vergleichbeispiel 1b**

Bei einer Mahlung wie in Beispiel 1a wurde die Drehzahl des Sichterrads auf 8000 U/min erhöht. Nach 190 min wurde die Mühle angehalten und das Auffanggefäß am Partikelfilter geöffnet. Es enthielt 450 g Siliziumpulver mit $d_{10}$ = 1,1 μm, $d_{50}$ = 2,7 μm und $d_{90}$ = 4,9 μm (Messung im Horiba LA950). Die aus der Partikelgrößenverteilung unter der Annahme kugelförmiger Partikel berechnete Oberfläche betrug 1,38 m²/g. Die Partikel wurden in Luft bei Raumtemperatur unter Umgebungsdruck gelagert. Der danach mit einem Sauerstoffanalysator Leco TCH 600 bestimmte Sauerstoffgehalt betrug 1,02 Gew.% bzw. 7,4 mg/m² bezogen auf die berechnete Partikeloberfläche.

**Beispiel 2**

5 kg polykristallines Reinstsiliziumpulver aus Solarsilizium (Wacker BGF (sg) Type PCL-NCS-F, $d_{10}$ = 100 μm, $d_{50}$ = 240 μm, $d_{90}$ = 440μm) wurden in das Vorlagegefäß einer Fließbettstrahlmühle CGS 16 (Hersteller Netzsch Trockenmahltechnik GmbH) eingefüllt. Die Mühle wurde mit 97 m³/h Luft bei 203°C und 3,2 bar Überdruck betrieben (Sauerstoffpartialdruck: 0,9 bar). Die Drehzahl des Sichterrads betrug 8000 U/min. Nach 60 min wurde die Mühle angehalten und das Auffanggefäß am Partikelfilter geöffnet. Es enthielt 270 g Siliziumpulver mit $d_{10}$ = 1,3 μm, $d_{50}$ = 2,9 μm und $d_{90}$ = 5,0 μm (Messung im Horiba LA950). Die aus der Partikelgrößenverteilung unter der Annahme kugelförmiger Partikel berechnete Oberfläche betrug 1,2 m²/g. Die Partikel wurden in Luft bei Raumtemperatur unter Umgebungsdruck gelagert. Der danach mit einem Sauerstoffanalysator Leco TCH 600 bestimmte Sauerstoffgehalt betrug 1,03 Gew.% bzw. 8,6 mg/m² bezogen auf die berechnete Partikeloberfläche.

**Vergleichsbeispiel 3**

5 kg polykristallines Reinstsiliziumpulver aus Solarsilizium (Wacker BGF (sg) Type PCL-NCS-F, $d_{10}$ = 100 μm, $d_{50}$ = 240 μm, $d_{90}$ = 440μm) wurden in das Vorlagegefäß einer Fließbettstrahlmühle CGS 16 (Hersteller Netzsch Trockenmahltechnik GmbH) eingefüllt. Die Mühle wurde mit 93 m³/h Stickstoff bei 20°C und 7 bar Überdruck betrieben. Die Drehzahl des Sichterrads betrug 6000 U/min. Nach 60 min wurde die Mühle angehalten und das Auffanggefäß am Partikelfilter geöffnet. Es enthielt 3,4 kg Siliziumpulver mit $d_{10}$ = 3,1 $\mu$m, $d_{50}$ = 4,8 $\mu$m und $d_{90}$ = 7,1 $\mu$m (Messung im Horiba LA950). Die aus der Partikelgrößenverteilung unter der Annahme kugelförmiger Partikel berechnete Oberfläche betrug 0,57 m$^2$/g. Die Partikel wurden in Luft bei Raumtemperatur unter Umgebungsdruck gelagert. Der danach mit einem Sauerstoffanalysator Leco TCH 600 bestimmte Sauerstoffgehalt betrug 0,27 Gew.% bzw. 4,7 mg/m$^2$ bezogen auf die berechnete Partikeloberfläche.

**Patentansprüche**

1. Verfahren zur Herstellung von Silizium-Partikeln durch Mahlen von Silizium enthaltenden Feststoffen, die Phasen von elementarem Silizium enthalten, in einer Strahlmühle unter Einsatz eines oder mehrerer Gase, die reaktives Gas mit einem Partialdruck von ≥ 0,3 bar enthalten,
   wobei reaktive Gase ausgewählt werden aus der Gruppe umfassend Sauerstoff, Ozon, anorganische Peroxide, Kohlenstoffmonoxid, Kohlenstoffdioxid, Ammoniak, Stickoxide, Cyanwasserstoff, Schwefelwasserstoff, Schwefeldioxid und flüchtige organische Verbindungen enthaltend 1 bis 4 Kohlenstoffatome, und
   wobei das reaktive Gas eine Temperatur von ≥ 50°C hat.

2. Verfahren zur Herstellung von Silizium-Partikeln gemäß Anspruch 1, **dadurch gekennzeichnet, dass** die Gase reaktives Gas mit einem Partialdruck von 0,4 bis 100 bar enthalten.

3. Verfahren zur Herstellung von Silizium-Partikeln gemäß Anspruch 1 oder 2, **dadurch gekennzeichnet, dass** reaktives Gas eine Temperatur von 80 bis 800°C hat.

4. Verfahren zur Herstellung von Silizium-Partikeln gemäß Anspruch 1 bis 3, **dadurch gekennzeichnet, dass** die Gase, die reaktives Gas enthalten, einen Druck von 1 bis 200 bar haben.

5. Verfahren zur Herstellung von Silizium-Partikeln gemäß Anspruch 1 bis 4, **dadurch gekennzeichnet, dass** die Gase als reaktives Gas Luft enthalten und einen Druck von ≥ 1,5 bar haben.

6. Verfahren zur Herstellung von Silizium-Partikeln gemäß Anspruch 1 bis 5, **dadurch gekennzeichnet, dass** die reaktiven Gase bei einem Druck von 1 bar einen Siedepunkt von ≤ 300°C haben.

7. Verfahren zur Herstellung von Silizium-Partikeln gemäß Anspruch 1 bis 6, **dadurch gekennzeichnet, dass** es sich bei den flüchtigen organischen Verbindungen um organische Peroxide, Epoxide, Alkene, Alkine, Alkohole, Ether, Aldehyde, Ketone, Carbonsäuren, Ester, Amine, Amide, Nitrile, Alkylhalogenide oder aliphatische Kohlenwasserstoffe handelt.

**Claims**

1. Process for producing silicon particles by milling silicon-containing solids which comprise phases of elemental silicon in a jet mill using one or more gases which comprise reactive gas having a partial pressure of ≥ 0.3 bar, where reactive gases are selected from the group encompassing oxygen, ozone, inorganic peroxides, carbon monoxide, carbon dioxide, ammonia, nitrogen oxides, hydrogen cyanide, hydrogen sulfide, sulfur dioxide, and volatile organic compounds containing 1 to 4 carbon atoms, and where the reactive gas has a temperature of ≥ 50°C.

2. Process for producing silicon particles according to Claim 1, **characterized in that** the gases comprise reactive gas having a partial pressure of 0.4 to 100 bar.

3. Process for producing silicon particles according to Claim 1 or 2, **characterized in that** reactive gas has a temperature of 80 to 800°C.

4. Process for producing silicon particles according to Claim 1 to 3, **characterized in that** the gases which comprise reactive gas have a pressure of 1 to 200 bar.

5. Process for producing silicon particles according to Claim 1 to 4, **characterized in that** the gases comprise air as reactive gas and have a pressure of ≥ 1.5 bar.

6. Process for producing silicon particles according to Claim 1 to 5, **characterized in that** the reactive gases under a pressure of 1 bar have a boiling point of ≤ 300°C.

7. Process for producing silicon particles according to Claim 1 to 6, **characterized in that** the volatile organic compounds are organic peroxides, epoxides, alkenes, alkynes, alcohols, ethers, aldehydes, ketones, carboxylic acids, esters, amines, amides, nitriles, alkyl halides or aliphatic hydrocarbons.

**Revendications**

1. Procédé de fabrication de particules de silicium par broyage de solides contenant du silicium, qui contiennent des phases de silicium élémentaire, dans un broyeur à jets en utilisant un ou plusieurs gaz, qui contiennent un gaz réactif ayant une pression partielle ≥ 0,3 bar,
les gaz réactifs étant choisis dans le groupe comprenant l'oxygène, l'ozone, les peroxydes inorganiques, le monoxyde de carbone, le dioxyde de carbone, l'ammoniac, les oxydes d'azote, le cyanure d'hydrogène, le sulfure d'hydrogène, le dioxyde de soufre et les composés organiques volatils contenant 1 à 4 atomes de carbone, et
le gaz réactif ayant une température ≥ 50 °C.

2. Procédé de fabrication de particules de silicium selon la revendication 1, **caractérisé en ce que** les gaz contiennent un gaz réactif ayant une pression partielle de 0,4 à 100 bar.

3. Procédé de fabrication de particules de silicium selon la revendication 1 ou 2, **caractérisé en ce que** le gaz réactif a une température de 80 à 800 °C.

4. Procédé de fabrication de particules de silicium selon les revendications 1 à 3, **caractérisé en ce que** les gaz qui contiennent un gaz réactif ont une pression de 1 à 200 bar.

5. Procédé de fabrication de particules de silicium selon les revendications 1 à 4, **caractérisé en ce que** les gaz contiennent de l'air en tant que gaz réactif et ont une pression ≥ 1,5 bar.

6. Procédé de fabrication de particules de silicium selon les revendications 1 à 5, **caractérisé en ce que** les gaz réactifs ont un point d'ébullition ≤ 300 °C à une pression de 1 bar.

7. Procédé de fabrication de particules de silicium selon les revendications 1 à 6, **caractérisé en ce que** les composés organiques volatils consistent en des peroxydes organiques, des époxydes, des alcènes, des alcynes, des alcools, des éthers, des aldéhydes, des cétones, des acides carboxyliques, des esters, des amines, des amides, des nitriles, des halogénures d'alkyle ou des hydrocarbures aliphatiques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3027690 A
- EP 1102340 A
- US 20080054106 A
- EP 1754539 A
- JP 2013206535 B
- WO 2007131502 A
- WO 2014081817 A
- EP 0538611 A
- WO 0033976 A
- DE 102015215415 A